Europäisches Patentamt

European Patent Office

Office européen des brevets

(19)

(11) Veröffentlichungsnummer: **0 315 884 B1**

(12) # EUROPÄISCHE PATENTSCHRIFT

(45) Veröffentlichungstag der Patentschrift: **04.03.92**

(51) Int. Cl.⁵: **B65D 59/06**

(21) Anmeldenummer: **88118217.4**

(22) Anmeldetag: **02.11.88**

(54) **Schutzkappe für mit Gewinde versehene Rohrenden oder Rohrmuffen sowie Verfahren zur Herstellung einer solchen Schutzkappe.**

(30) Priorität: **12.11.87 DE 3738417**

(43) Veröffentlichungstag der Anmeldung:
**17.05.89 Patentblatt 89/20**

(45) Bekanntmachung des Hinweises auf die
Patenterteilung:
**04.03.92 Patentblatt 92/10**

(84) Benannte Vertragsstaaten:
**BE DE FR GB NL**

(56) Entgegenhaltungen:
**DE-A- 2 834 443**
**FR-A- 2 547 893**

(73) Patentinhaber: **Reu, Winfried**
**Goethestrasse 27**
**W-4700 Hamm 1(DE)**

(72) Erfinder: **Reu, Winfried**
**Goethestrasse 27**
**W-4700 Hamm 1(DE)**

(74) Vertreter: **Weydert, Robert**
**Dennemeyer & Associates Sarl P.O. Box 1502**
**L-1015 Luxembourg(LU)**

EP 0 315 884 B1

Rank Xerox (UK) Business Services

**Beschreibung**

Die Erfindung betrifft eine aus thermoplastischem Kunststoff bestehende Schutzkappe für mit Gewinde versehene Rohrenden oder Rohrmuffen, wobei die Schutzkappen mit einer Schicht aus Verstärkungsmaterial und einem entsprechenden zum Rohr- und Muffengewinde komplementären Schutzkappengewinde versehen sind.

Solche Schutzkappen finden mittlerweile umfassend Verwendung beim Transport und bei der Lagerung von Ölfeldrohren, wie z.B. Steig- und Mantelrohren, die stets an ihren Enden mit Gewinden oder bereits aufgeschraubten Muffen, bzw. mit Außengewinde an einem und mit verdickter Muffe und Innengewinde am anderen Ende versehen sind.

Die hochempfindlichen und außerordentlich tragfähigen Feingewinde solcher Rohre brauchen neben einem Korrosionsschutz vor allem einen Schutz gegenüber mechanischen Schädigungen, wie sie bei rauhen Beanspruchungen durch Ladespiele, Kranhakentransport, Anschlagen an Ladeluken oder - kanten, Rutschen über Stapel entstehen.

In der Regel werden solche Kunststoffschutzkappen daher mit ringförmigen Stahleinlagen verstärkt.

Die Herstellung solcher aus Stahl- Kunststoff-Verbundmaterial bestehenden Schutzkappen gestaltet sich dadurch relativ aufwendig, daß zunächst der Stahlring in einer eine Negativform zur Schutzkappe bildenden Spritzgußform sehr genau positioniert werden muß und die Spritzgußform danach mit sehr hohem Druck durch einen Extruder gefüllt werden muß.

Abgesehen von der Notwendigkeit, schon zu Beginn eines jeden Füllvorganges möglichst schnell einen stationären Fließzustand für den thermoplastischen Kunststoff zu erreichen und der dadurch notwendigen ausgesprochen aufwendigen Bauweise der Spritzgußform und des Extruders mit jeweils umfangreichen Kühl- und Heizeinrichtungen, ergibt sich beim Abkühlen des Verbundmaterials aufgrund der unzureichenden Haftung zwischen Kunststoff und Stahl, sowie der unterschiedlichen Wärmeausdehnungskoeffizienten eine starke Schrumpfung des Kunststoffs.

Die Schrumpfung ist nur sehr schwer beherrschbar und ist oft die Ursache für mangelnde Formstabilität und sogar für ein Lösen des Verbundes.

Die in der DE 28 34 443 A1 offenbarte Schutzkappe vermeidet zwar zum Teil die aus der Schrumpfung resultierenden Probleme durch Nutzung eines mit Durchbrechungen versehenen Stahlkerns und damit durch formschlüssige Verbindung, bleibt aber weiterhin dem aufwendigen Spritzgußverfahren verhaftet. Dieses zeigt seine Grenzen gerade bei der Herstellung von Schutzkappen für Rohre großen Durchmessers-hier sind etwa Casing-Rohre mit Durchmessern größer 14" zu betrachten - deutlich durch eine aufwendige Temperaturführung der Spritzgußform, durch sehr große und unwirtschaftliche Extruder und durch einen langsamen Verfahrensablauf.

Das hohe Gewicht solcher durch Stahlringe verstärkten Kunststoff- Schutzkappen ist darüber hinaus nicht nur bei Schutzkappen größeren Durchmessers sehr nachteilig, es erschwert auch schon bei kleinen Abmessungen die Handhabung beim Auf- und Abschrauben und erhöht die Transportkosten.

Zwei weitere Schwierigkeiten resultieren aus der Verwendung eines Verbundmaterials zweier in ihrem Elastizitäts/Plastizitätsverhalten so unterschiedlicher Werkstoffe wie Stahl und Kunststoff.

Eine Schutzkappe, deren Stahlring - herstellungsbedingt oder durch äußere Schädigungen vor oder nach dem Aufschrauben - oval oder gar beulig wurde, zwingt den thermoplastischen Kunststoff in seine Form und läßt sich nicht oder nur noch mit größten Schwierigkeiten auf- bzw. abschrauben.

Der zweite durch den Verbund von Stahl und Kunststoff begründete Nachteil liegt in der nicht vorhandenen Wiederverwendbarkeit solcher Schutzkappen.
Ein Recycling hätte die Trennung von Kunststoff und Stahl zur Voraussetzung, welche sowohl auf mechanischem, als auch auf thermischem Wege nur mit großem Aufwand zu erreichen ist. Die üblichen Schutzkappen bleiben daher Wegwerfprodukte.

Der Erfindung lag von daher die Aufgabe zugrunde, eine Schutzkappe aus thermoplastischem Kunststoff bereitzustellen, welche in kurzen Taktzeiten mit Verstärkungsmaterial auch für große Rohrdurchmesser einfach und mit möglichst geringem Gewicht hergestellt werden kann, welche weiterhin Schwund- und Schrumpfprozesse des Kunststoffes im Verbund zum Verstärkungsmaterial vermeidet, wobei die Schutzkappe nicht nur plastische, sondern auch gleichermaßen elastische Verformbarkeit besitzt und letztlich die gebrauchte Schutzkappe wieder als Grundlage zur Neuherstellung verwendet werden kann.

Gelöst wird diese Aufgabe durch die im kennzeichnenden Teil des Hauptanspruchs aufgezeigten Merkmale.

Vorteilhafte Weiterbildungen der erfindungsgemäßen Lösung sind in den Unteransprüchen erfaßt.

Gleichermaßen wird ein Verfahren offenbart, das im Besonderen zur Herstellung der erfindungsgemäßen Schutzkappe geeignet ist.
Die erfindungsgemäße Schutzkappe besteht hierbei vorteilhafter Weise aus schraubenförmig überlappend gewickeltem Kunststoff-Profil und die Verstärkungsschicht aus abwechselnden Lagen von thermoplastischem Kunststoff-Profil und Fasermatten, -Gewebe oder -Häcksel.

Neben der einfachen Herstellung, bei der ein Kunststoff-Profil ohne Unterbrechung bis zur Gesamtwanddicke gewikkelt und nur im Bereich der Verstärkungsschicht Glasfaserhäcksel auf das warme Kunststoffprofil aufgeblasen oder als Matte bzw. Gewebe aufgelegt und damit schichtweise eingewickelt wird, entsteht durch die abwechselnde schraubenförmige Schichtung von Kunststoffprofil und Verstärkungsmaterial ein außerordentlich fester und besonders bei großer Abmessungen leichter und einfach zu handhabender formstabiler Verbundkörper.

Vorteilhafterweise weist eine solche Schutzkappe in der Muffenausführung eine stufenförmig ausgearbeitete Dichtlippe auf, welche über die Gewindelänge der Schutzkappe und über die Muffenmitte hinaus in die Muffe ragt und ein Zapfenende besitzt, welches im Verschraubungszustand die Stirnfläche des Rohres berührt.

Dadurch wird eine Dichtung geschaffen, die das Unterwandern von Feuchtigkeit und deren Eindringen in den Gewindebereich vermeidet und damit die Wirkung des üblicherweise benutzten Dichtfettes verstärkt.

Wichtig und vorteilhaft für die sichere Handhabung sind am über das Rohr- bzw. Muffenende des Rohres hinausragenden Teil der Schutzkappe Öffnungen für entsprechende Verschraubungswerkzeuge.
Hier können Hebelwerkzeuge oder gleichwirkende mit Hilfsantrieb versehene Mittel angesetzt werden, die Auf- und Abschrauben auch nach langen Lagerzeiten erleichtern.

Zweckmäßigerweise sind diese Öffnungen als radiale Bohrungen oder über den Umfang verteilte Ausnehmungen ausgebildet, die einen formschlüssigen Verbund erlauben, welcher gegenüber einer reibschlüssigen Verbindung Vorteile bezüglich der Abnutzung aufweist.

Das erfindungsgemäße Verfahren weist die kennzeichnenden Merkmale des Anspruchs 6 auf und besteht zunächst in der schraubenförmig überlappenden Wicklung eines thermoplastischem Kunststoff-Profils auf einen Dorn.

Das Kunststoff-Profil besitzt hierbei max. Extrusionstemperatur und wird direkt nach dem Austritt aus einem Handelsüblichen Profil-Extruder dem Wickelprozess zugeführt.

Je nach Herstellung von Muffen- oder Endenschutzkappe wird in den Wanddickenbereichen, die von dem später vorhandenen Schutzkappeninnen- oder - Außengewinde einen Abstand besitzt, der 50 - 90 % der Gesamtwanddicke entspricht, ein Verstärkungsmaterial eingebracht. Eine solche Anordnung des Verstärkungsmaterials in den jeweils vom Gewinde entfernten Bereichen bewirkt eine hohe Formanpassungsfähigkeit des Kappengewindes an das Rohrgewinde bei gleichzeitiger hoher Gesamtformbeständigkeit der Kappe.

Nach dem Einbringen des Verstärkungsmaterials wird mit dem Kunststoff-Profil bis zum Erreichen der Gesamtwanddicke weitergewickelt und die so entstandene Schutzkappe vom Dorn geschoben und spanabhebend bearbeitet.

Mit Hilfe eines solchen Wickelverfahrens können nicht nur beliebig große Abmessungen von Schutzkappen hergestellt sondern auch die Probleme des Schwindens bzw. der Schrumpfung im Verbund zwischen Kunststoff und Versärkungsmaterial beseitigt werden.
Die schraubenförmige Umwicklung unter Umgebungsdruck übt eine leichte Zugkraft auf das erwärmte Profil aus. Diese Zugkraft wird genau so eingestellt, daß - im Zusammenspiel mit der Relaxationsfähigkeit des Kunststoffs - keinerlei verbleibende eingefrorene Restspannungen in Längsrichtung der Schutzkappe vorhanden sind, während eine bis zur vollständigen Auskühlung und ausreichenden Relaxation des Kunststoffs vorhandene leichte Umfangsspannung eine genau abgestimmte radial wirkende Kompressionskraft erzeugt, die für einen sicheren Verbund zwischen Verstärkungsmaterial und Kunststoff sorgt, bis nach einer bestimmten Abkühl- und Ruhezeit der Abbau jeglicher inneren Umfangsspannung vollendet ist und die spanabhebende Bearbeitung durch Gewindeschneiden beginnen kann.

Vorteilhafterweise läßt sich ein Polyethylenprofil für dieses Verfahren verwenden, da je nach Nutzung von HD-(high density) oder LD- (low density) Polyethylen eine genaue Grundspannungs- und Festigkeitseinstellung bei relativ niedrigen Temperaturen kombiniert wird.

Eine sehr hohe Herstellgeschwindigkeit und eine sehr wirtschaftliche Wicklungsweise erreicht man mit einem Dorn, der im wesentlichen der mehrfachen Länge der Schutzkappe entspricht.
Die so entstandene Mehrfachlänge wird nach der Wicklung auf einer Revolverdrehbank jeweils zunächst mit Innen-oder Außengewinde versehen, dann auf die Einzellänge abgestochen und der Vorgang dann entsprechend der Mehrfachlänge wiederholt.

Bei solchen Mehrfachlängen zeigen sich die Vorteile einer Temperaturführung des Dorns durch Kühlen und Erwärmen beim Wickeln und/oder Abziehen der Schutzkappe in besonderem Maße. So kann zu Beginn des Wickelvorganges eine Erwärmung des Dorns über Umgebungstemperatur jedoch wesentlich unterhalb der Extrusionstemperatur des Profils ein schelles Abkühlen der am Dorn anliegenden Kunststoffgrenzschicht bewirken und damit jeglichen Haftungsaufbau zwischen Dorn und Schutzkappe vermeiden.

Eine Abkühlung des Dorns unterhalb der Umgebungstemperatur vor oder während des Abschiebens der Kunststoffschutzkappe bewirkt eine weitere Haftungserniedrigung zwischen Kunststoffschutzkappe und Dorn durch eine kontrollierte Temperaturschrumpfung des Dorns und erleichtert dadurch das Abschieben. Eine solche Verfahrensweise gleicht der Anwendung eines Falt- oder Klappdorns ohne dessen aufwendige Bauweise zu benötigen und unterstützt die Wirkung eines evtl. aufgebrachten Trennmittels.

Einen produktionstechnisch sehr einfachen Weg des Einbringens von Verstärkungsmaterial stellt das Aufblasen von Faserhäcksel dar. Hierbei wird eine zerkleinerte Verstärkungsfaser auf das warme Kunststoff-Profil aufgeblasen, nachträglich von ebenfalls warmen Kunststoffprofil überdeckt und somit fest in die Struktur der Schutzkappe eingebunden.

Sollen solche Schutzkappen besonders hohen Belastungen gerecht werden, nutzt man vorteilhafterweise in Matten und/oder Gewebe orientierte und verbundene Fasern. Solche Fasermatten oder -Gewebe, in verstärkter Form auch als Rovings lieferbar, werden ebenfalls schraubenförmig auf eine warme Kunststoffschicht gewickelt und nachträglich wieder mit warmem Kunststoff überdeckt.

Aufgrund ihrer hohen Festigkeit bei niedrigem Gewicht eignen sich Glasfasern und auch Kohlefasern in Häcksel- und/oder Mattenform besonders zur Verwendung in dem erfindungsgemäßen Verfahren.

Im Verbund mit dem Kunststoff geben diese Fasern der Schutzkappe neben ihrer plastischen Verformbarkeit eine außerordentlich hohe Elastizität, welche auch nach schweren mechanischen Beanspruchungen eine Rückformung zuläßt und daher auch nach Einwirken dieser Belastung ohne Probleme auf- und abgeschraubt werden kann.

Angepaßt auf den jeweiligen Anwendungsfall stellt die Nutzung von verstrecktem Polyethylen als Verstärkungsmaterial eine besonders vorteilhafte Verfahrensweise dar. Hierbei wird nur ein einziges - wenn auch unterschiedlich behandeltes - Material zur Herstellung der Schutzkappe benutzt. Bei dieser Ausbildung des Verfahrens kann sowohl ein separates verstrecktes Polyethylenprofil als Verstärkungsschicht gewickelt werden, als auch das normal zur Wicklung der Kunststoffschicht verwandte Polyethylenprofil durch mehrere, in ihrem Abstand und in der Breitenführung zueinander verfahrbare Profilumlenkrollen, welche zwischen Extruder und Dorn angeordnet sind, während der Wicklung des Verstärkungsbereiches verstreckt werden. Die Verstreckung, d.h. die Dehnung bewirkt eine Linearisierung der Molekülketten und damit eine Festigkeitssteigerung des Polyethylens.

Die Nutzung eines hohlen Dornes, der mit einem durchmessergleichen Deckel verschlossen ist, bietet den Vorteil, daß bei der Herstellung von Schutzkappen, die an einem Ende verschlossen sind, dieser Deckel, der in der Regel aus einem dem Material des Dornes entsprechenden Material hergestellt ist, durch eine Scheibe aus thermoplastischem Kunststoff ersetzt wird, der dem Werkstoff der Schutzkappe entspricht.

Die Ränder dieser Kunststoffscheibe, welche bei dem Endprodukt den Kappendeckel bildet, werden dann beim Umwicklungsverfahren durch das warme Kunststoffprofil angeschmolzen und so thermisch mit der Außenwand der Schutzkappe verbunden.

Ein vorteilhaftes Verfahren zur Formung eines Schutzkappendeckels mit einem inneren Rücksprung - z.B. für einen problemlosen und das Rohr schonenden Kranhakentransport - wird dadurch ermöglicht, daß der Hohlraum des Dornes durch einen den Athmosphärendruck wesentlich unterschreitenden Druck beaufschlagt wird. Hierdurch formt sich die nötigenfalls vorgewärmte Kunststoffscheibe entsprechend des Innenbereiches des Dornes und bildet so den gewünschten Rücksprung.

Ein nach dem Abkühlen im Hohlraum des Dornes aufgebrachter Überdruck erleichtert das Abschieben der Kappe vom Dorn.

Im Hinblick auf die Wiederverwendung und die problematische Endlagerung von verrottungsfestem Kunststoff bietet die erfindungsgemäße Schutzkappe gemäß Anspruch 1 den Vorteil, daß sie nach der Nutzung zu einem Granulat von Kunststoff und Kunststoff-Verstärkungsmaterial zerkleinert und zumindest teilweise einem Profilextruder für das erfindungsgemäße Verfahren gemäß Anspruch 6 zugefüllt wird.

Anhand eines Ausführungsbeispiels soll sowohl die erfindungsgemäße Schutzkappe als auch das zur Herstellung solcher Schutzkappen besonders geeignete erfindungsgemäße Verfahren näher erläutert werden.

Es zeigen:

Fig. 1    das Prinzip einer zur Durchführung des Verfahrens geeigneten Vorrichtung,

Fig. 2    eine erfindungsgemäße Muffenschutzkappe im Längsschnitt in aufgeschraubtem Zustand,

Fig. 3    eine aufgeschraubte erfindungsgemäße Endenschutzkappe im Längsschnitt.

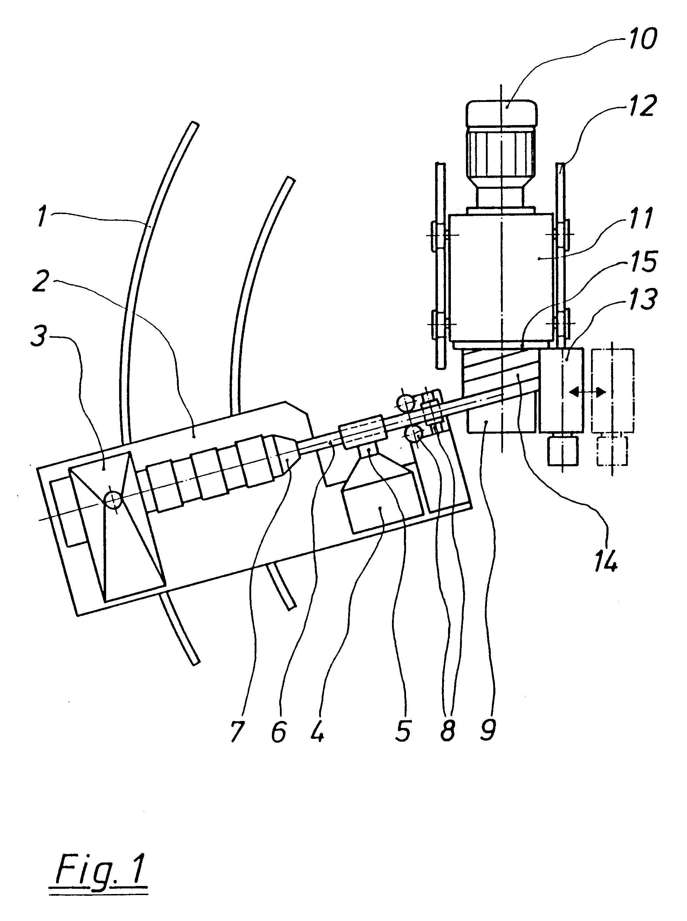

Die Fig. 1 zeigt einen auf bogenförmig angeordneten Schienen 1 verfahrbaren Extruderwagen 2, welcher den Profilextruder 3 und die Faserhäcksel- und Auftragsvorrichtung 4 trägt. Der Ausleger 5 der Faserauftragsvorrichtung 4 ist in seiner Längsachse so verstellbar, daß der durch ihn transportierte Häcksel auf das Kunststoff-Profil 6 aufgestreut werden kann.

Das Kunststoff-Profil 6 wird mit mit Hilfe der Extruderdüse 7 geformt und als endloses Profilband über die Führungs- und Spannrolle 8 auf den Dorn 9 geleitet.

Der Dorn ist mit einem Drehantrieb 10 versehen und mit diesem auf einem Schlitten 11 gegenüber dem Extruderwagen 2 auf Schienen 12 oszillierend verfahrbar. Zu Beginn des Wickelvorganges wird das aus der Extruderdüse 7 austretende warme Profil 6 über die Führungs- und Spannrolle 8 zwischen den Dorn 9 und der Anpressrolle 13 eingefädelt und der Wickelvorgang eingeleitet.

Nach Wicklung einer Wanddicke von 20 % der Gesamtwanddicke einer Endenschutzkappe 14 wird die Faserauftragsvorrichtung 4 eingeschaltet und bis zur Wicklung von 30 % der Gesamtschichtdicke in Betrieb gehalten. Nach Wicklung der Gesamtschichtdicke wird das Kunststoff-Profil 6 zwischen Dorn 9 und Extruderdüse 7 getrennt und die so entstandene Schutzkappe mit Hilfe des Abschieberinges 15 vom Dorn 9 entfernt und einer hier nicht näher dargestellten Revolverdrehbank zur spanenden Weiterbearbeitung zugeführt.

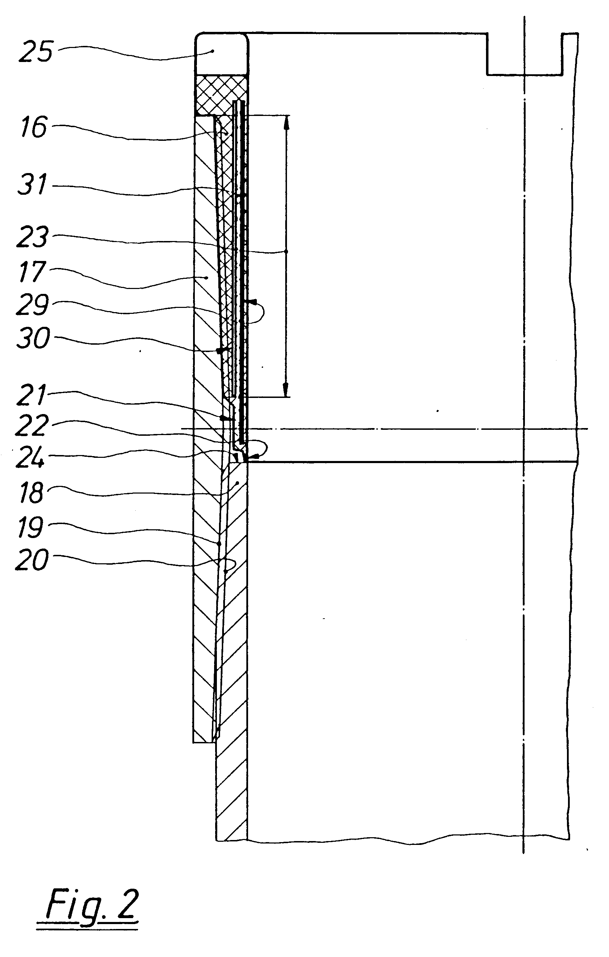

Fig. 2 zeigt eine erfindungsgemäße Muffenschutzkappe 16, welche in eine Muffe 17 eingeschraubt ist, die wiederum auf einem Rohrende 18 durch eine Gewindeverbindung 19 und 20 befestigt ist. Die Muffenschutzkappe 16 weist eine stufenförmig angeformte Dichtlippe 21 auf, welche in einem Zapfenende 22 ausläuft.

Das Zapfenende 22 ragt über die Gewindelänge 23 der Schutzkappe 16 und über die Muffenmitte hinaus in die Muffe 17 und berührt unter Einschraubdruck im Verschraubungszustand die Stirnfläche 24 des Rohrendes 18.

Hierdurch wird jegliches Eindringen von Feuchtigkeit in die Gewindebereiche verhindert und eine Korrosion der tragenden Gewindegänge vermieden. Die Ausnehmungen 25 dienen der Aufnahme entsprechender Schraubwerkzeuge.

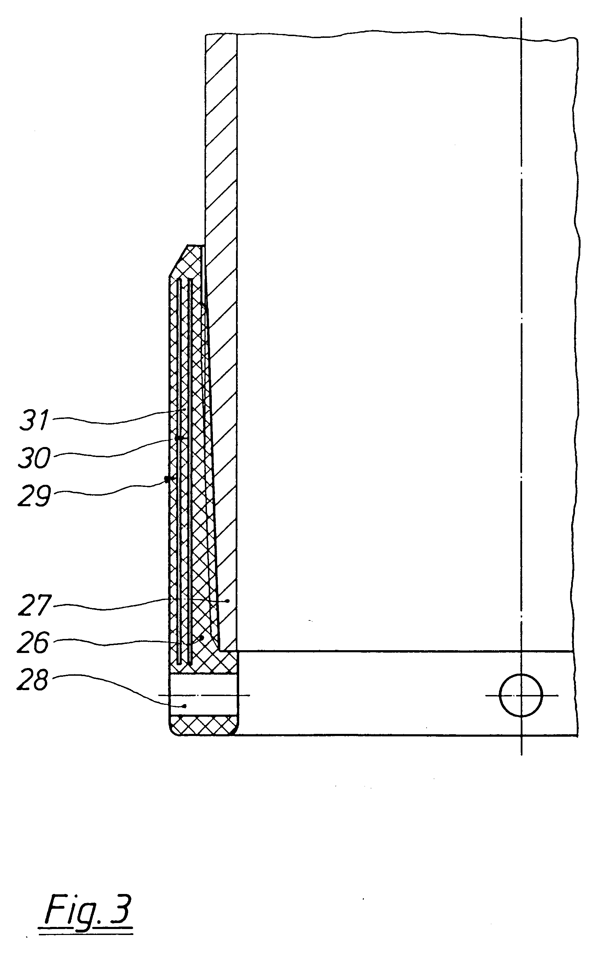

Fig. 3 zeigt eine erfindungsgemäße Endenschutzkappe 26, die auf ein Rohrende 27 aufgeschraubt wurde. Die Endenschutzkappe 26 besitzt zur Aufnahme von Verschraubungswerkzeugen die radialen Bohrungen 28.

Beide Kappen 16 und 26 weisen Verstärkungslagen 29 und 30 aus Glasfasermatten auf, welche während des Wicklungsvorganges eingebracht werden.

Deutlich sichtbar durch die zwischen den Verstärkungslagen 29 und 30 vorhandene Kunststoff-Profillage 31 ist die Struktur der Schutzkappe, wie sie durch abwechselndes Wickeln von Lagen aus thermoplastischem Kunststoff-Profil und Fasermatten, -Gewebe oder -Häcksel entsteht.

**Patentansprüche**

1.  Schutzkappe (16,26) aus thermoplastischem Kunststoff für mit Gewinde versehene Rohrenden (27) oder Rohrmuffen (17), wobei die Schutzkappen mit einer Schicht aus Verstärkungsmaterial (29,30) und einem entsprechendem zum Rohr- oder Muffengewinde komplementären Schutzkappengewinde (19) versehen sind,
    dadurch gekennzeichnet,
    daß die Schutzkappe aus schraubenförmig überlappend gewickeltem Kunststoff-Profil und die Verstärkungsschicht aus abwechselnden Lagen von thermoplastischem Kunststoff-Profil und Fasermatten,- Gewebe oder Häcksel besteht.

2.  Schutzkappe nach Anspruch 1,
    dadurch gekennzeichnet,
    daß die Muffenausführung (16) eine stufenförmig angeformte Dichtlippe (21) aufweist, welche über die Gewindelänge (23) der Schutzkappe (16) und über die Muffenmitte hinaus in die Muffe (17) ragt und ein Zapfende (22) besitzt, welches im Verschraubungszustand die Stirnfläche (24) des Rohrendes (18) berührt.

3.  Schutzkappe nach Anspruch 2 oder 3,
    dadurch gekennzeichnet,
    daß deren über das Rohr- bzw. Muffenende hinausragender Teil Öffnungen für Verschraubungswerkzeuge besitzt.

4.  Schutzkappe nach Anspruch 3,
    dadurch gekennzeichnet,
    daß die Öffnungen als radiale Bohrungen (28) ausgebildet sind.

5.  Schutzkappe nach Anspruch 3,
    dadurch gekennzeichnet,
    daß die Öffnungen als Ausnehmungen (25) im Umfang ausgebildet sind.

6.  Verfahren zur Herstellung einer aus thermoplastischem Kunststoff bestehenden Schutzkappe für mit Gewinde versehene Rohrenden oder Rohrmuffen, wobei die Schutzhappen mit einer Schicht aus Verstärkungsmaterial und einem zum Rohr- oder Muffengewinde komplementären Schutzhappengewinde versehen werden
    dadurch gekennzeichnet,
    daß zunächst ein auf max. Extrusionstemparatur erwärmtes thermoplastisches Kunststoff zu einem Profil ausgeformt und als endloses Profilband schraubenförmig überlappend auf einen Dorn gewickelt wird,

daß nach Wicklung von mindestens 50 % der Gesamtwanddicke einer Rohrrendenschutzkappe oder mindestens 10 % der Gesamtwanddikke einer Rohrmuffenschutzkappe bis zur Wicklung von max. 90 % der Gesamtwanddicke einer Rohrrendenschutzkappe oder max. 50 % der Gesamtwanddicke einer Rohrmuffenschutzkappe abwechselnde Lager des Kuntstoffprofils und von aus Fasermatter, - Gewebe oder Häcksel bestehendem Verstärkungsmaterial erzeugt werden, und
daß nach Wicklung der Gesamtwanddicke die so entstandene Schutzkappe vom Dorn abgeschoben und spanabhebend bearbeitet wird.

7. Verfahren gemäß Anspruch 6,
dadurch gekennzeichnet,
daß als thermoplastisches Kunststoff-Profil ein Polyethylen-Profil verwendet wird.

8. Verfahren gemäß Anspruch 6 oder 7,
dadurch gekennzeichnet,
daß die Länge des Dorns der ein- oder mehrfachen Länge einer Schutzkappe entspricht.

9. Verfahren nach Anspruch 6 bis 8,
dadurch gekennzeichnet,
daß das Einbringen von Verstärkungsmaterial durch Aufblasen von Faserhäcksel erfolgt.

10. Verfahren nach Anspruch 6 bis 8,
dadurch gekennzeichnet,
daß das Einbringen von Verstärkungsmaterial durch Wickeln von Fasermatten oder Fasergewebe erfolgt.

11. Verfahren insbesondere nach Anspruch 6 bis 8,
dadurch gekennzeichnet,
daß das Einbringen von Verstärkungsmaterial durch Wickeln von verstrecktem Polyethylen erfolgt.

12. Verfahren nach Anspruch 9 oder 10,
dadurch gekennzeichnet,
daß Faserhäcksel, Fasermatten und Fasergewebe aus Glasfasern bestehen.

13. Verfahren nach Anspruch 9 oder 10,
dadurch gekennzeichnet,
daß Faserhäcksel, Fasermatten und Fasergewebe aus Kohlefasern bestehen.

14. Verfahren nach Anspruch den vorstehenden Ansprüchen,
dadurch gekennzeichnet,
daß die spanabhebende Bearbeitung durch Gewindeschneiden innen oder außen erfolgt.

15. Verfahren nach den vorstehenden Ansprüchen,
dadurch gekennzeichnet,
daß die spanabhebende Bearbeitung durch Gewindeschneiden innen oder außen und durch nachträgliches Abstechen auf Schutzkappenlänge erfolgt.

16. Verfahren nach den vorstehenden Ansprüchen,
dadurch gekennzeichnet,
daß der Dorn beim Wickeln und/oder beim Abschieben der Schutzkappe gekühlt oder gewärmt wird.

17. Verfahren nach Anspruch den vorstehenden Ansprüchen,
dadurch gekennzeichnet,
daß als Dorn eine hohle Metallhülse benutzt wird, deren äußeres Ende mit einem durchmessergleichen Deckel verschlossen ist.

18. Verfahren nach Anspruch 17,
dadurch gekennzeichnet,
daß als durchmessergleicher Deckel eine Scheibe aus thermoplastischem Kunststoff benutzt wird.

19. Verfahren nach Anspruch 18,
dadurch gekennzeichnet,
daß der Hohlraum des Dorns mit einem zum Umgebungsdruck unterschiedlichen Druck beaufschlagt wird.

20. Verfahren nach Anspruch 6,
dadurch gekennzeichnet,
daß das Kunstoffprofil zumindest zum Teil aus von nach diesem Verfahren hergestellten, zu Granulat zermalenen Schutzhappen extrudiert wird.

**Claims**

1. Protective cap (16, 26) of thermoplastic synthetic material for threaded tube ends (27) or tube sockets (17), in which respect the protective caps are provided with a coating of reinforcing material (29, 30) and a respective protective-cap thread (19) which complements the tube and socket thread, **characterised in that** the protective cap is made of a bolt-shaped overlappingly wound synthetic-material profile, and the reinforcing coating is made of alternating layers of thermoplastic synthetic-material profiles and fibre mats, weaves or chaff.

2. Protective cap according to claim 1, **characterised in that** the socket arrangement (16) comprises a stepped integral sealing lip (21), which extends across the length of the thread (23) of the protective cap (16) and beyond the socket centre into the socket (17) and comprises a pin end (22) which, when bolted, contacts the end surface (24) of the tube end (18).

3. Protective cap according to claim 2 or 3, **characterised in that** its section which extends beyond the tube or socket end has openings for bolting tools.

4. Protective cap according to claim 3, **characterised in that** the openings are arranged as radial bores (28).

5. Protective cap according to claim 3, **characterised in that** the openings are arranged as peripheral recesses (25)

6. Process for the manufacture of a protective cap of thermoplastic synthetic material for threaded tube ends or tube sockets, in which respect the protective caps are provided with a coating of reinforcing material and are provided with a protective-cap thread which complements the tube or socket thread, **characterised in that** initially a thermoplastic synthetic material, which has been heated to extrusion temperature, is formed into a profile and wound as an endless profile strip to overlap bolt-like on a mandrel, that after winding at least 50% of the overall wall thickness of a tube-end protective cap or at least 10% of the overall wall thickness of a tube-socket protective cap up to a winding of maximum 90% of the overall wall thickness of a tube-end protective cap or maximum 50% of the overall wall thickness of a tube-socket protective cap, alternate layers of the synthetic-material profile and of the reinforcing material, composed of fibre matting, weave or chaff, are produced, and that after winding the overall wall thickness, the thus produced protective cap is pushed off the mandrel and machine cut.

7. Process according to claim 6, **characterised in that** the thermoplastic synthetic-material profile is a polyethylene profile.

8. Process according to claim 6 or 7, **characterised in that** the length of the mandrel corresponds with single or multiple lengths of a protective cap.

9. Process according to claim 6 to 8, **characterised in that** the inclusion of reinforcing material is carried out by blowing on fibre chaff.

10. Process according to claims 6 to 8, **characterised in that** the inclusion of reinforcing material is carried out by winding fibre matting or fibre weave.

11. Process in particular according to claim 6 to 8, **characterised in that** the inclusion of reinforcing material is carried out by winding of stretched polyethylene.

12. Process according to claim 9 or 10, **characterised in that** fibre chaff, fibre matting and fibre weave are made of glass fibre.

13. Process according to claim 9 or 10, **characterised in that** fibre chaff, fibre matting and fibre weave are made of carbon fibre.

14. Process according to the above claims, **characterised in that** the machine-cutting process is performed by threaded cutters inside or outside.

15. Process according to the above claims, **characterised in that** the machine-cutting process is performed by thread cutters inside or outside and by subsequent cutting to the length of the protective cap.

16. Process according to the above claims, **characterised in that** the mandrel is cooled or heated during winding and/or whilst pushing off the protective cap.

17. Process according to the above claims, **characterised in that** the mandrel is a hollow metal sleeve, the outer end of which is sealed by a cover of same diameter.

18. Process according to claim 17, **characterised in that** the cover of same diameter is a disc of thermoplastic synthetic material.

19. Process according to claim 18, **characterised in that** the hollow space of the mandrel is loaded with a pressure which differs from the ambient pressure.

20. Process according to claim 6, **characterised in that** the synthetic-material profile is at least partially extruded from granulated protective caps manufactured according to this process.

**Revendications**

1. Chapeau de protection (16, 20) en matière thermoplastique pour des extrémités de tubes (27) ou des manchons de tubes (17), équipés de filetages, étant entendu que les chapeaux de protection sont munis d'une couche d'un matériau de renforcement (29, 30) et d'un filetage (19) du chapeau de protection, complémentaire et correspondant au filetage du tube ou du manchon, caractérisé en ce que le chapeau de protection est constitué d'un profilé en matière plastique formant un recouvrement en hélice et en ce que la couche de renforcement est constituée de couches successives différents de profilés en matière thermoplastique et de nattes ou de tissus de fibres ou de fibres hachées.

2. Chapeau de protection suivant la revendication 1, caractérisé en ce que la forme d'exécution (16) du manchon présente une lèvre d'étanchéité (21), qui présente une forme adaptée, en gradins, et qui dépasse, de la longueur (23) du filetage du chapeau de protection (16) et du milieu du manchon, dans l'intérieur du manchon (17) et qui possède une extrémité de tourillon (22) qui, après vissage, vient au contact de la surface frontale (24).

3. Chapeau de protection suivant la revendication 2 ou la revendication 3, caractérisé en ce que sa partie, qui dépasse de l'extrémité du tube ou du manchon vers l'extérieur, possède des ouvertures pour des outils de vissage.

4. Chapeau de protection suivant la revendication 3, caractérisé en ce que les ouvertures sont réalisées sous la forme d'alésages radiaux (28).

5. Chapeau de protection suivant la revendication 3, caractérisé en ce que les ouvertures sont réalisées, en périphérie, sous la forme d'évidements (25).

6. Procédé de fabrication d'un chapeau de protection en matière thermoplastique pour des extrémités de tubes ou des manchons tubulaires, équipés de filetages, les chapeaux de protection étant munis d'une couche de matériau de renforcement et d'un filetage du chapeau de protection, complémentaire et correspondant au filetage du tube ou du manchon, caractérisé en ce que:
   - d'abord une matière thermoplastique, portée au maximum à la température d'extrusion, reçoit une forme de profilé et, sous la forme d'un profilé en bande, est enroulée en hélice sur un mandrin, en se recouvrant,
   - ensuite, après enroulement d'au minimum 50 % de l'épaisseur totale de la paroi d'un chapeau de protection d'extrémité de tube, ou d'au minimum 10 % de l'épaisseur totale de la paroi d'un chapeau de protection de manchon de tube, jusqu'à obtenir au maximum un enroulement de 90 % de l'épaisseur totale de la paroi d'un chapeau de protection d'extrémité de tube, ou de 50 % de l'épaisseur totale de la paroi d'un chapeau de protection de manchon de tube, des couches alternées de profilés de matière plastique et de matériau de renforcement, constitué de nattes, de tissus de fibres ou de fibres hachées, sont réalisées,
   - et, après enroulement de l'épaisseur totale, le chapeau de protection ainsi obtenu est retiré du mandrin et est usiné par enlèvement de copeaux.

7. Procédé suivant la revendication 6, caractérisé en ce que l'on utilise, comme profilé en matière thermoplastique, un profilé de polyéthylène.

8. Procédé suivant la revendication 6 ou la revendication 7, caractérisé en ce que la longueur du mandrin correspond à la longueur d'un chapeau de protection, ou à un multiple de cette longueur.

9. Procédé suivant les revendications 6 à 8, caractérisé en ce que l'apport de matériau de renforcement se fait par soufflage de fibres hachées.

10. Procédé suivant les revendications 6 à 8, caractérisé en ce que l'apport de matériau de renforcement se fait par enroulement avec des nattes ou des tissus de fibres.

11. Procédé, en particulier, suivant les revendications 6 à 8, caractérisé en ce que l'apport de matériau de renforcement se fait par enroulement avec du polyéthylène déchiqueté.

12. Procédé suivant la revendication 9 ou la revendication 10, caractérisé en ce que les nattes, les tissus ou les hachures de fibres sont constitués de fibres de verre.

13. Procédé suivant la revendication 9 ou la revendication 10, caractérisé en ce que les nattes, les tissus ou les hachures de fibres sont constitués de fibres de carbone.

14. Procédé suivant l'une quelconque ou plusieurs des revendications précédentes, caractérisé en ce que l'usinage avec enlèvement de copeaux se fait par taillage intérieur ou extérieur de filetage.

15. Procédé suivant l'une quelconque ou plusieurs des revendications précédentes, caractérisé en ce que l'usinage avec enlèvement de copeaux se fait par taillage intérieur ou extérieur de filetage suivi d'un décolletage sur la longueur du chapeau de protection.

16. Procédé suivant l'une quelconque ou plusieurs des revendications précédentes, caractérisé en ce que le mandrin est refroidi ou chauffé pendant l'enroulement et/ou l'expulsion du chapeau de protection.

17. Procédé suivant l'une quelconque ou plusieurs des revendications précédentes, caractérisé en ce que l'on utilise comme mandrin une douille métallique creuse, dont l'extrémité extérieure est fermée par un couvercle de même diamètre.

18. Procédé suivant la revendication 17, caractérisé en ce que l'on utilise comme couvercle de même diamètre, un disque en matière thermoplastique.

19. Procédé suivant la revendication 18, caractérisé en ce que l'enceinte creuse du mandrin reçoit une pression différente de celle de l'environnement.

20. Procédé suivant la revendication 6, caractérisé en ce que le profilé de matière plastique est extrudé, au moins en partie, à partir de chapeaux de protection fabriqués suivant ce procédé et moulus de façon à obtenir des granulés.

**Fig.1**

_Fig. 2_

31

30

29

27

26

28

*Fig.3*